# EUROPEAN PATENT SPECIFICATION

(11) **EP 0 776 597 B1**
(45) Date of publication and mention of the grant of the patent: **03.04.2002**
(21) Application number: 96308509.7
(22) Date of filing: 26.11.1996
(51) Int. Cl.: A01B 3/46, A01B 15/20

(54) **Control system for a plough**
Pflugsteuersystem
Système de contrôle pour charrue

(30) Priority: 29.11.1995 GB 9524419
(43) Date of publication of application: 04.06.1997
(73) Proprietor: DOWDESWELL ENGINEERING CO. LTD., Stockton Nr. Rugby Warwickshire (GB)
(72) Inventor: Andrews, Mark Adrian, c/o Dowdeswell Eng Co Ltd, Stockton, Nr Rugby (GB); Coleman, Philip, c/o Dowdeswell Engineering Co Ltd, Stockton, Nr Rugby (GB)
(74) Representative: Hallam, Arnold Vincent

(56) References cited:
- DE-A- 3 720 334
- DE-A- 3 900 086
- DE-A- 4 226 987
- FR-A- 1 567 308
- FR-A- 2 329 174

## Description

The present invention relates to a control system for a plough.

A major problem in ploughing with a semi-mounted plough is controlling the plough during ploughing across sloping fields and in turnaround at the end of a plough run. The present invention seeks to provide an improved control system for a plough.

DE-A- 4226987 discloses a trailing plough implement comprising a support bar carrying a bearer arm with adjustable plough shares which can revolve.

Accordingly, the present invention provides a control system for a semi-mounted plough having:
a headstock for connection to a towing tractor;
a plough wheel beam pivotally mounted to said headstock;
a steering wheel attached to said wheel beam for steering said plough;
and a plough main beam pivotally mounted to said wheel beam for supporting a plurality of plough blades;
characterised in that the system comprises:
first sensing means for monitoring the angle of the plough wheel beam relative to said headstock and providing a first, wheel beam signal representative of the headstock angle;
second sensing means for monitoring the angle of said steering wheel of the plough relative to said wheel beam of the plough and providing a second, steering signal representative of the steering angle;
and control means for monitoring said wheel beam and steering signals and controlling the angle of the steering wheel in dependence thereon.

The present invention is described hereinafter, by way of example, with reference to the accompanying drawings, in which:

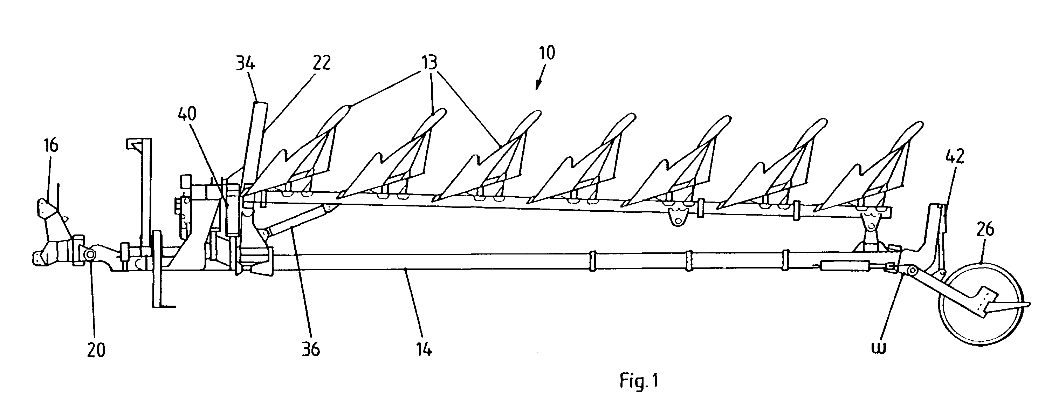

- Figure 1: is a side elevation of a semi-mounted plough;

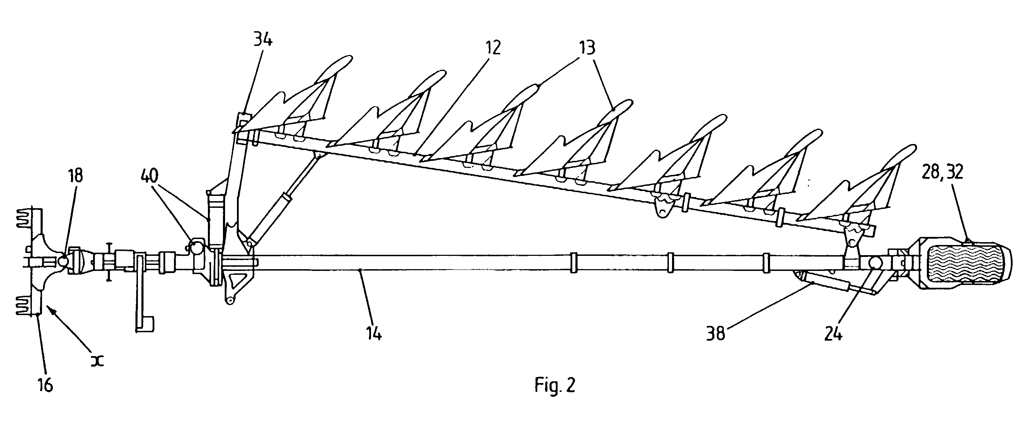

- Figure 2: is a plan view of the semi-mounted plough of Figure 1;
- Figure 3: is a schematic diagram of a hydraulic circuit for the plough of Figure 1;
- Figure 4: is a schematic diagram of an electrical control circuit for the plough of Figure 1; and
- Figures 5 and 6: are schematic block diagrams in more detail of the circuit of Figure 4.

Referring now to the drawings, these show a semi-mounted plough 10 having a main beam 12 which carries plough blades 13 and is supported on a wheel beam (drawbar) 14 in the convention manner. The plough is mountable on a tractor (not shown) by a headstock 16, again in conventional manner.

The pivotal connection of the wheel beam 14 with the headstock 16 is provided with a first angle sensor 18 which monitors the angle of the beam 14 relative to the longitudinal axis of the tractor. A limit switch 20 is also provided at the pivotal connection of the beam 14 with the headstock 16. This monitors the vertical pivot position of the beam 14 relative to the headstock 16 and is in either an ON or OFF position, depending on whether or not the headstock 16 is raised or lowered on the tractor linkage.

An offset linear sensor 22 monitors the lateral pivotal position of the plough beam 12 relative to the beam 14 and provides a signal in dependence on this. A further sensor 24 which is a steering wheel to beam angle sensor monitors the angle between a steering wheel 26 in a rear wheel assembly and the plough beam 12.

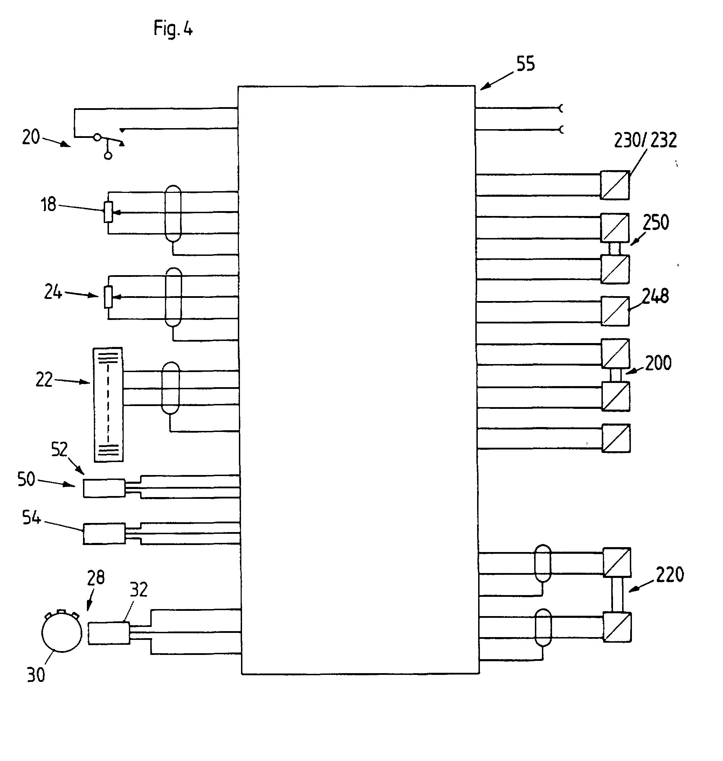

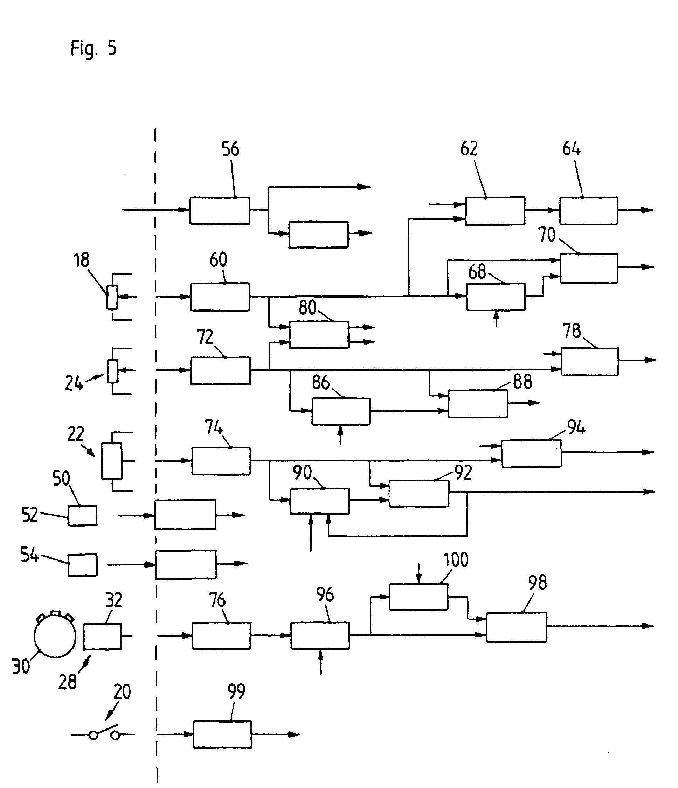

The rear wheel assembly is provided with a sensor 28 (Figures 4 and 5) for monitoring the distance travelled by the wheel 26 and therefore by the tractor towing the plough. This is conveniently in the form of, for example, a toothed or castellated disc 30 mounted for rotation on the wheel 26 and a cooperating proximity sensor 32 which provides a train of pulses in response to rotation of the disc, the pulse count providing an indication of the distance travelled. Alternatively, the wheel nuts or fixings themselves can provide the train of pulses.

The sensors 18 and 24 are conveniently simple potentiometers which provide an output voltage in dependence on the angular position. The offset sensor 22 is conveniently in the form of a bank of reed switches mounted on a turnover arm 34 of the plough and arranged to be closed in succession by a suitable means as the main beam 12 is moved towards the wheel beam 14, and opened in succession by reverse pivotal movement of the main beam 12 away from the wheel beam 14.

Offset, or pivotal movement of the main beam 12 inwardly and outwardly towards and away from the wheel beam 14 is effected by a double-acting offset piston/cylinder unit 36.

A steering cylinder 38 is used to steer the wheel 26 relative to the wheel beam 14, a depth cylinder 42 which is mounted at the wheel end of the wheel beam 14 is used to control the wheel depth 26 by raising and lowering the wheel beam 14 relative to the wheel 26 and turnover cylinders 40 are used to effect turnover of the plough main beam 12, all of these cylinders being hydraulic, double-acting piston/cylinder units.

A respective end proximity sensor 50, 52 (Figures 4 and 5) is provided at each extreme turnover position of the plough main beam 12. Each sensor senses the position of the plough main beam 12 when it reaches its respective completed turnover position and generates a signal accordingly.

A centre position proximity sensor 54 (Figures 4 and 5) is also provided to sense when the plough beam 12 reaches its mid or centre position during turnover and generates a signal in response to the plough beam 12 reaching this centre position.

The above-described sensors provide signals to a control circuit 55 which in turn controls the plough through a hydraulic circuit.

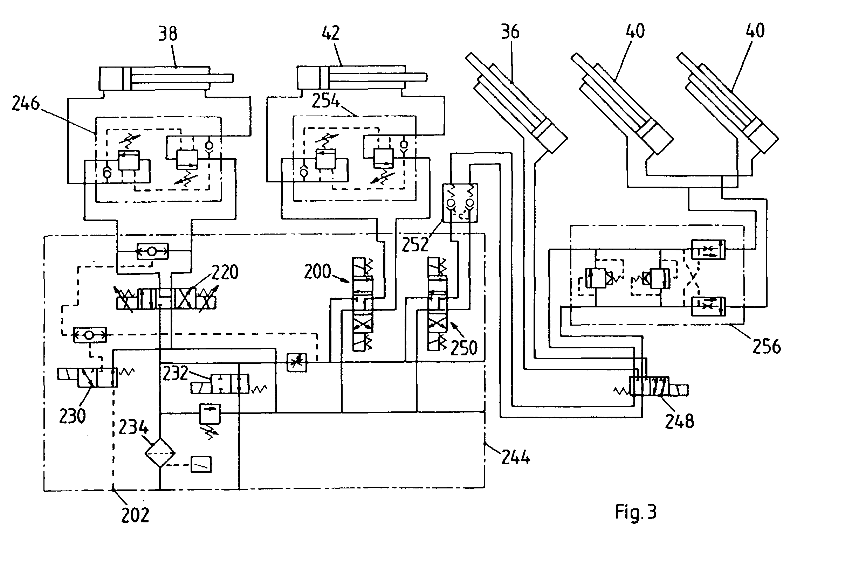

A schematic diagram of the hydraulic circuit is shown in Figure 3. The supply of hydraulic fluid is through a manifold block assembly 244 which contains a three-position proportional steering valve 220, a three-position offset/turnover directional valve 250, a three-position depth/furrow directional valve 200, a sensing valve 230 and a load valve 232.

Fluid is supplied to the manifold block 244 through a pressure filter 234. The proportional steering valve 220 controls the supply of fluid through a dual over centre valve 246 to the steering cylinder 38. The depth/furrow directional valve 200 controls the supply of fluid through a further dual over centre valve 254 to the depth cylinder 42.

The offset/turnover directional valve 250 in the manifold block 244 controls the flow of hydraulic fluid through a holding valve 252 to a six port diverter valve 248. The valve 248 determines whether fluid is supplied either to the offset cylinder 36 or, through a further valve 256 to the turnover cylinders 40. The valve 256 is a dual flow control and dual cross relief valve. Whilst the valve 248 determines which of the cylinders 36 and 40 are supplied with fluid, the valve 250 controls the direction of flow of the fluid to the cylinders. As can be seen from Figure 3, the valves 200, 220, 230, 232, 248 and 250 are all solenoid controlled valves.

The valve solenoids are controlled through valve drivers 300 and valve logic 112 by a control logic circuit 66, conveniently in the form of a microprocessor.

The hydraulic system illustrated in Figure 3 can accommodate closed, open and load sensing hydraulic system connections. When used on open centre hydraulic systems, the load valve 232 is used whilst the sensing port 202 is closed. When the system is used on closed centre hydraulic systems, the solenoid of the sensing valve 230 is disconnected, the load valve 232 is omitted with its fluid line and the sensing port 202 being closed. When used on load sensitive hydraulic systems, the solenoid of the sensing valve 230 is connected and the load valve 232 is removed and the associated line closed.

Using the above-described hydraulic circuit, each of the three hydraulic systems can be used to their full advantage. In particular, the fuel saving of load sensing hydraulics can be used on the plough.

Referring now to Figure 5, this shows part of the control circuit for the plough control system. A 12-volt DC power supply from the tractor is passed through a supply filter 56 to provide power for the solenoid valves in the hydraulic circuit and through a stabilised power supply to provide a supply for the electrical circuit.

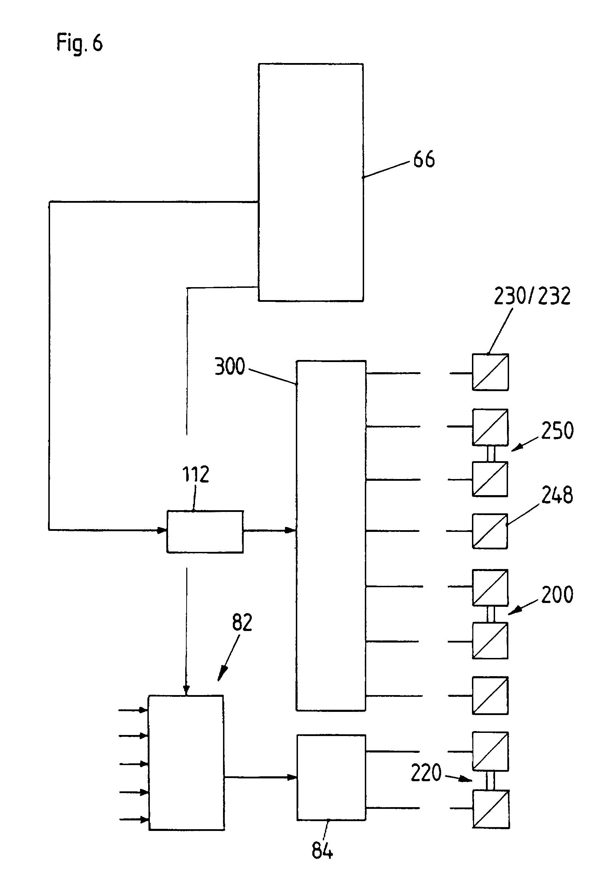

The signal from the wheel beam to tractor angle sensor 18 is passed through a signal conditioning circuit 60 which generally filters out electrical noise and scales the signal to provide an output signal which varies over a desired range in response to changes in the input signal. This output signal is compared with a centre reference signal in a comparator 62, the output signal of which provides an indication of the direction of movement, i.e. to the left or right or straight ahead of the tractor, the resulting signal being stored in a memory 64 and applied to the control logic circuit 66 (Figure 6). The output of the signal conditioning circuit 60 is also applied directly and through a position memory circuit 68 to respective inputs of a comparator 70 whose output is applied to the control logic circuit 66.

The plough direction can alternatively be determined and stored in two other ways:
1. By comparator 62 and memory 64 from a signal derived from the sensor 24 and associated signal conditioning circuit 72.
2. Introduction of a second proximity sensor (as per 50,52) and associated signal conditioning, to provide feedback of the plough blades position either to the left or right.

The steering wheel to beam angle sensor 24, the offset sensor 22 and the distance travelled sensor 28 apply their output signals to respective signal conditioning circuits 72, 74 and 76 which operate in the same manner as the signal conditioning circuit 60. The output of the signal conditioning circuit 72 is applied to one input of a comparator 78, the other input which receives a preselected reference value, the output of the comparator being applied to the control logic circuit 66. The outputs of the signal conditioning circuits 60 and 72 are also applied to respective inputs of an error amplifier 80 whose outputs are applied to a command select circuit 82 which is also controlled by the control logic circuit 66. The command select circuit 82 controls a proportional valve driver 84 which controls the steering of the wheel 26 by way of the cylinder 36 to maintain the correct or desired steering angle.

The output from the signal conditioning circuit 72 or alternatively 60 is also applied to a position memory circuit 86 whose output is applied to one input of an error amplifier 88. The other input of the error amplifier is connected to the output of the signal conditioning circuit 60, the error amplifier 88 providing an error signal in dependence upon the comparison of the drawer bar to tractor angle signal and the steering wheel to beam angle signal previously memorised by the position memory 86 on instructions from the control logic 66. The output signal of the error amplifier 88 is applied to the command select circuit 82 to control the steering angle of the wheel 26 on re-entry of the plough bladed into the ground after turnaround of the plough.

The offset sensor signal from the signal conditioning circuit 74 is applied to a deployed position memory 90. This is controlled by the control logic circuit 66 to store the signal which is representative of the angle of the plough main beam 12 relative to the wheel beam 14 which was previously set by the operator for ploughing. The output of the memory 90 is applied to a deployed position comparator 92 which compares the memorised signal with the actual signal from the signal conditioning circuit 74 and provides an adjustment signal which is applied to the control logic circuit 66 and also is fed back to the deployed position memory 90. The output signal from the signal conditioning circuit 74 is also applied to one input of a stowed position comparator 94 which compares this value with a stowed position reference value to provide an output signal to the control logic circuit 66 which is indicative of the angle position of the plough main beam 12 relative to its stowed position.

The distance signal output of the signal conditioning circuit 76 is applied to a distance counter 96 which counts the number of pulses and applies its count signal directly to one input of a distance comparator 98 and through a distance memory 100 to a second input of the distance comparator 98. The count which is stored in the distance memory 100 is controlled by the control logic circuit 66 which also receives the output comparison signal of the comparator 98. A reset signal can be applied from the control logic circuit 66 to the distance counter 96.

The limit switch 20 is also connected to the control logic 66 through a conditioning circuit 99.

Under normal conditions, during ploughing, the angle between the drawbar 14 and tractor (headstock 16) (sensor 18), the angle between the steering wheel 26 and the wheel beam 14 (sensor 24) the offset or deployed angle of the main beam 12 relative to the wheel beam 14 (offset sensor 22) have all been preselected and representative signals have been stored in the position memories 68, 86 and 90. The angle between the drawbar and tractor and the angle between the steering wheel 26 and the wheel beam 14 may be the same with the wheel running parallel to the direction of movement of the towing tractor (referred to as the parallel angle), although the action of the plough blades in the ground means that the effect of drag might require the angles to be different. For the purpose of the following description it is assumed that the wheel beam 14 is angled to the left of the tractor as viewed in the direction of movement of the tractor. Control of the control system by an operator is effected through a control box in the tractor cab and as the plough approaches the end of its furrow the operator first of all actuates a switch to raise the headstock 16 on the tractor linkage. This changes the angular position of the plough headstock relative to the wheel beam 14 which results in the limit switch 20 being closed, applying a signal to the control logic 66 to set a sequence of operations in motion.

After a preselected time delay which is controlled by a timer in the control logic circuit 66, the control logic circuit 66 applies a signal to the valve logic circuit 112 which in turn controls the depth/furrow directional valve to actuate cylinder 42 to raise the wheel beam 14 to lift the plough blades clear of the ground.

As an alternative to the time delay, the raising of the wheel beam 14 may be carried out after the plough has travelled a predetermined distance measured by the distance measurement sensor 28. The preselected distance count is stored in the control logic 100. When the limit switch 20 closes, the distance counter 96 is reset by a signal from the control logic and the distance comparator 98 then compares the count from the counter 96 with that stored in the distance memory 100. Once the distance counter 96 has counted to the reference level of the distance memory 100, the distance comparator 98 applies a signal to the control logic which then causes the cylinder 42 to be actuated to raise the wheel beam 14 relative to the wheel 26.

The choice of a time delay or distance count may be optional, at the control of the operator. In addition, the length of the time delay or distance count may also be preselected by the operator.

A preselected time period after the depth cylinder 42 is actuated, the logic circuit 66 actuates the steering cylinder 38 through the proportional steering valve 220 to steer the wheel to the same angle as the headstock 16 to wheel beam angle If one assumes that the tractor has reached the end of a ploughing line and the operator is turning to the left to commence a new, parallel ploughing line, the steering wheel 26 will turn to the left with the tractor. The steering valve 220 is energised to steer the wheel 26. The relationship between the headstock to wheel beam angle and the steering wheel to wheel beam angle is referred to as the trailer angle and is maintained throughout the tractor turn.

Once the wheel beam 14 has been raised, whilst the above operation is being carried out, the operator begins to steer the tractor and plough combination towards the new ploughing direction. During this manoeuvre, the steering cylinder 38 has priority over the turnover, offset and depth cylinders 42, hydraulic fluid being provided to the steering cylinder, where needed, in preference to the others.

When the steering cylinder 38 is actuated to steer the wheel 26, the control logic circuit 66 actuates the offset/turnover valve 248 and the offset/turnover directional valve 250 to apply fluid to the offset cylinder 36 to fold the plough main beam 12 in towards the wheel beam 14. The direction of flow of fluid to the offset cylinder 36 is determined by the position of the valve 250. This folding of main beam 12 from its working position towards the wheel beam 14 is monitored by the offset sensor 22 whose output signal is applied to the stowed position comparator 94. Once the output signal of the comparator 94 indicates that the plough main beam 12 has reached its stowed position the controlled logic circuit 66 then controls the valves 248 and 250 to actuate the turnover cylinders 40 to turn over the plough. The direction of turnover is again controlled by the position of the valve 250. Since the valves 248 and 250 control both the folding and turnover of the plough it will be appreciated that it is not possible for the turnover to commence while the plough beam 12 is being folded towards the wheal beam 14.

Both the folding and turnover of the plough beam 12 can be manually over-ridden by the operator.

As the tractor turns, the angular change between the headstock 16 and the wheel beam 14 is monitored by the sensor 18. Under normal circumstances, the tractor operator will turn past the new plough line before coming back towards it, as a result of which there will be a point at which the wheel beam 14 is in line with the direction of movement of the tractor and this will be indicated by the sensor 18. Once the signal from the sensor 18 indicates that the tractor and wheel beam 14 are in line, the control logic circuit 66 responds to actuate the cylinder 38 to steer the wheel 26 back towards its operating angle, previously stored in the position memory 86. This subsequent steering of the wheel 26 is monitored by the sensor 24 with hydraulic fluid flow priority being given to the cylinder 38.

As the tractor continues to turn and perhaps negotiate any obstacles in its path, the angle between the headstock 16 and the wheel beam 14 continues to change and, as described above, the signals from the sensors 18 and 24 are used by the control logic circuit 66 to cause the steering cylinder 68 to adjust the steering of the wheel 26.

The turnover sequence continues, if it has not already been completed, until the cylinders 40 have completed the turnover of the plough beam 12.

There are two possible turnover options which are preselectable by the operator.

In the first option, turnover of the plough continues until the relevant proximity end sensor 50,52 senses completion of the turnover and the control logic circuit 66 stops actuation of the turnover cylinders 40.

In the second option, the actuation of the turnover cylinders 40 is halted by the control logic circuit 66 when the centre proximity sensor 54 senses that the plough beam 12 is in its central position, midway between the extreme turnover positions, and applies a signal to the control logic circuit 66. The plough beam 12 then remains in this centre position until the operator recommences the turnover sequence, the control logic circuit 66 then actuating the turnover cylinders 40 to continue turnover until a signal is generated by the relevant end proximity sensor 50, 52, indicating that the turnover sequence is completed.

Once the plough turnover sequence has been completed and the plough main beam 12 has been turned over to its new position the control logic circuit 66 actuates the valves 248 and 250 to actuate the offset cylinder 36 to move the main beam 12 away from the wheel beam 14 into its working position. Again, the angle between the main beam 12 and wheel beam 14 is monitored by the offset sensor 22. The output signal from the signal conditioning circuit 74 is compared with the deployed position reference in the memory 90 by the comparator 92. The output signal from the comparator 92 is monitored by the control logic circuit 66 until it indicates that the main beam 12 has reached it working position, whereupon the control logic circuit 66 stops actuation of the offset cylinder 36.

As the plough then approaches the beginning of the next plough run, the operator lowers the tractor linkage. This opens the limit switch 20 which is sensed by the control logic circuit 66. After a preselected time delay or a predetermined distance measurement by the distance sensor 28, the control logic circuit 66 actuates valve 200 to actuate the depth cylinder 42 and lower the wheel beam 14 relative to the wheel 26 back into its working position where the plough blades penetrate the ground for ploughing.

As has previously been mentioned, the choice of a time delay or distance measurement can be optionally set by the operator who may also preselect the actual distance or time delay, depending on the system used.

Once the plough blades enter the ground, they exert a drag on the tractor and cause the wheel beam 14 to pivot such that the angle sensed by the angle sensor 24 changes. After a predetermined time period following actuation of the depth cylinder 42, the steering cylinder 38 is actuated under the control of the control logic circuit 66 to steer the wheel 26 in a direction to maintain the preselected and stored angles sensed by the sensors 18 and 24 .

Control of the control system is effected from the tractor cab by the operator. The control system reduces the workload for the operator, giving a faster and more efficient turnaround operation, increasing the time that the plough is in work.

By steering the rear wheel 26 with respect to the position of the tractor before, during and/or after plough turnover, a reduction in field headland distance/width is obtained. By enabling the angle of the rear wheel to be adjusted by the operator during ploughing, the plough can be steered uphill when ploughing across slopes. This helps to reduce the amount that the plough can slide downhill.

It will also be appreciated that the automatic operations of the control systems can be over-ridden by the operator who can alter the depth of the rear of the plough and trim the position of the front furrow from the tractor cab.

The positions of the plough front body, wheel beam angle with respect to the tractor and effective length of the plough is stored electronically by the operator whilst ploughing and is effected by the simple pressing of a switch on a control box in the cab. An emergency stop button can be provided which halts all electro-hydraulic functions and can be reset by the operator. Control of the angles monitored by the sensors 18 and 24 enables the operator to vary the ploughing width from the cab and store these values in the memories so that the plough can be returned to these values simply and automatically.

## Claims

1. A control system for a semi-mounted plough having:
a headstock (16) for connection to a towing tractor;
a plough wheel beam (14) pivotally mounted to said headstock (16);
a steering wheel (26) attached to said wheel beam for steering said plough;
and a plough main beam (12) pivotally mounted to said wheel beam (14) for supporting a plurality of plough blades (13);
**characterised in that** the system comprises:
first sensing means (18) for monitoring the angle of the plough wheel beam (14) relative to said headstock and providing a first, wheel beam signal representative of the headstock angle;
second sensing means (24) for monitoring the angle of said steering wheel (26) of the plough relative to said wheel beam (14) of the plough and providing a second, steering signal representative of the steering angle;
and control means (55) for monitoring said wheel beam and steering signals and controlling the angle of the steering wheel (26) in dependence thereon.

2. A control system as claimed in claim 1 wherein said control means (55) is operable to compare the monitored steering angle of said steering wheel (26) with a preselected value and control said steering angle in dependence thereon.

3. A control system as claimed in claim 1 or 2 wherein said control means (55) is operable to adjust the steering angle of said steering wheel (26) in dependence on the monitored headstock angle of said wheel beam (14).

4. A control system as claimed in any of the preceding claims wherein said control means (55) is operable to control the steering angle of the steering wheel (26) thereby to control the effective ploughing width of the plough.

5. A control system as claimed in any of the preceding claims wherein said control means (55) is operable to control the steering angle of the steering wheel (26) thereby to steer said plough in a preselected direction relative to the direction of towing of said headstock by said tractor.

6. A control system as claimed in any of the preceding claims further comprising means (20) for monitoring the vertical position of said headstock (16) relative to said wheel beam (14) and providing an elevation signal in response to raising and lowering of said headstock (16).

7. A control system as claimed in claim 6 having lift means (42) for raising and lowering said wheel beam (14) relative to said steering wheel (26).

8. A control system as claimed in claim 7 wherein said control means (55) is operable to actuate said lift means (42) to raise or lower said wheel beam (14) relative to said steering wheel (26) in response to said elevation signal from said headstock monitoring means (20) indicating respectively raising or lowering of said headstock (16).

9. A control system as claimed in claim 8 further comprising:
a timer means for storing a lifting preselected time delay;
and wherein said control means (55) is operable to actuate said lift means (42) to raise or lower said wheel beam (14) relative to said steering wheel (26), after said preselected time delay, in response to said elevation signal from said headstock monitoring means (20) indicating respectively raising or lowering of said headstock (16).

10. A control system as claimed in any of the preceding claims further comprising distance means (28) for monitoring rotation of said steering wheel (26) and providing a distance signal representative of the distance travelled by said steering wheel.

11. A control system as claimed in claim 10 when appendant to claim 8 further comprising:
a store means for storing a preselected lift distance of travel of said wheel;
and wherein said control means (55) is operable to actuate said lift means (42) to raise or lower said wheel beam (14) relative to said steering wheel (26), after said wheel has travelled said preselected distance, in response to said elevation signal from said headstock monitoring means (20) indicating respectively raising or lowering of said headstock (16).

12. A control system as claimed in claim 11 further comprising:
reset means for resetting said distance monitoring means (28) in response to said elevation signal from said headstock monitoring means (20);
and comparator means for comparing said distance signal from said distance monitoring means with said stored preselected lift distance of travel;
and wherein said control means (55) is operable to actuate said lift means (42) to raise or lower said wheel beam (14) in dependance on said comparison.

13. A control system as claimed in any of the preceding claims wherein said control means (55) is operable to steer said steering wheel so as to maintain said steering angle and said headstock angle substantially the same.

14. A control system as claimed in any of the preceding claims further comprising:
offset means (36) for moving said plough main beam (12) between a first, extended position and a second, folded position relative to said wheel beam (14), wherein in said first, extended position said main beam (12) is pivoted away from said wheel beam (14) into a working position and in said second, folded position said main beam (12) is pivoted away from said wheel beam (14) into a non-working position adjacent said wheel beam.

15. A control system as claimed in claim 14 wherein said control means (55) is operable to actuate said offset means (36) to move said plough main beam (12) between said first, extended and second, folded positions.

16. A control system as claimed in claim 15 further comprising:
delay means for storing a folding preselected time delay;
and wherein said control means (55) is operable to actuate said offset means (36) to move said main beam (12) relative to said wheel beam (14) from said first, extended position towards said second, folded position or from said second, folded position towards said first, extended position, after said folding preselected time delay, in response to said headstock signal indicating respectively raising or lowering of said headstock (16).

17. A control system as claimed in claims 9 and 16 wherein said folding preselected time delay is longer than said lifting preselected time delay.

18. A control system as claimed in claim 7 and any of claims 14 to 17 wherein said control means (55) is operable to actuate said offset means (36) to move said main beam (12) relative to said wheel beam (14) from said first, extended position towards said second, folded position or from said second, folded position towards said first, extended position in response to actuation of said lift means (42) respectively to raise or lower said wheel beam (14).

19. A control system as claimed in claim 18 wherein said control means (55) is operable to actuate said offset means (36) to move said main beam (12) relative to said wheel beam (14) from said first, extended position towards said second, folded position or from said second, folded position towards said first, extended position a preselected time delay after actuation of said lift means (42) respectively to raise or lower said wheel beam (14).

20. A control system as claimed in claim 15 further comprising:
store means for storing a preselected folding distance of travel of said wheel (26);
and wherein said control means (55) is operable to actuate said offset means (36) to move said main beam (12) relative to said wheel beam (14) from said first, extended position towards said second, folded position or from said second, folded position towards said first, extended position, after said wheel (26) has travelled said preselected folding distance, in response to said headstock signal indicating respectively raising or lowering of said headstock (16).

21. A control system as claimed in claim 18 wherein said control means (55) is operable to actuate said offset means (36) to move said main beam (12) relative to said wheel beam (14) from said first, extended position towards said second, folded position or from said second, folded position towards said first, extended position a preselected distance of travel after actuation of said lift means (42) respectively to raise or lower said wheel beam (14).

22. A control system as claimed in claims 11 and 20 wherein said preselected folding distance is longer than said preselected lift distance.

23. A control system as claimed in any of claims 14 to 22 further comprising:
offset monitoring means (22,50,52,54) for monitoring the offset position of said main beam (12) relative to said wheel beam (14) and providing an offset signal in dependence thereon.

24. A control system as claimed in claim 23 wherein said offset monitoring means (22, 50, 52, 54) is operable to provide an extended offset signal and a folded offset signal in response to said main beam (12) moving respectively into said first, extended position and said second, folded position.

25. A control system as claimed in claim 24 wherein said offset monitoring means (22, 50, 52, 54) is operable to provide a further offset signal in response to said main beam (12) moving into a further offset position intermediate said first, extended position and said second, folded position.

26. A control system as claimed in claim 24 or 25 wherein said control means (55) is operable to actuate said offset means (36) to move said plough main beam (12) from said first, extended position towards said a second, folded position and to deactuate said offset means (36) in response to said folded offset signal.

27. A control system as claimed in claim 24, 25 or 26 wherein said control means (55) is operable to actuate said offset means (36) to move said plough main beam (12) between said first, extended position and said a second, folded position and to deactuate said offset means (36) in response to said further offset signal.

28. A control system as claimed in any of the preceding claims further comprising turnover means (40) actuable to turn over said plough main beam (12).

29. A control system as claimed in claim 28 when appendant to any of claims 23 to 27 wherein said control means (55) is operable to actuate said turnover means (40) to turn over said plough main beam (12) in response to a preselected signal from said offset monitoring means (22, 50, 52, 54).

30. A control system as claimed in claim 29 wherein said preselected signal is said folded offset signal.

## Patentansprüche

1. Ein Steuersystem für einen Aufsattelpflug mit:
einem Dreipunktbock (16) zum Anbau an einen Zugschlepper;
einem Pflugradbaum (14), der am besagten Dreipunktbock (16) schwenkbar montiert ist;
einem Lenkrad (26), das am besagten Radbaum angebracht ist, um den besagten Pflug zu lenken;
und einem Hauptpflugbaum (12), der am besagten Radbaum (14) schwenkbar montiert und mit einer Mehrzahl von Pflugkörpern (13) ausgerüstet ist;
**dadurch gekennzeichnet, dass** das System Folgendes umfasst:
ein erstes Messmittel (18), um den Winkel des Pflugradbaums (14) mit Hinsicht auf den besagten Dreipunktbock zu überwachen und ein erstes Radbaumsignal abzugeben, das dem Bockwinkel entspricht;
ein zweites Messmittel (24), um den Winkel des besagten Lenkrads (26) des Pflugs mit Hinsicht auf den besagten Radbaum (14) des Pflugs zu überwachen und ein zweites Lenksignal abzugeben, das dem Lenkwinkel entspricht;
sowie Steuermittel (55), um den besagten Radbaum und die Lenksignale zu überwachen und den Winkel des Lenkrads (26) dementsprechend zu steuern.

2. Ein Steuersystem nach Anspruch 1, dessen besagte Steuermittel (55) dafür eingesetzt werden können, um den überwachten Lenkwinkel des besagten Lenkrads (26) mit einem vorgewählten Wert zu vergleichen und abhängig von diesem Wert zu steuern.

3. Ein Steuersystem nach Anspruch 1 oder Anspruch 2, dessen besagte Steuermittel (55) dafür eingesetzt werden können, um den Lenkwinkel des besagten Lenkrads (26) abhängig von dem überwachten Bockwinkel des besagten Radbaums (14) einzustellen.

4. Ein Steuersystem nach den vorstehenden Ansprüchen, dessen besagte Steuermittel (55) zur Lenkwinkelsteuerung des Lenkrads (26) eingesetzt werden können, um die effektive Arbeitsbreite des Pflugs auf diese Weise zu steuern.

5. Ein Steuersystem nach den vorstehenden Ansprüchen, dessen besagte Steuermittel (55) zur Lenkwinkelsteuerung des Lenkrads (26) eingesetzt werden können, um den besagten Pflug auf diese Weise in eine mit Hinsicht auf die Zugrichtung des besagten Dreipunktbocks durch den besagten Schlepper vorgewählte Richtung zu lenken.

6. Ein Steuersystem nach den vorstehenden Ansprüchen, das ferner ein Mittel (20) zur Überwachung der vertikalen Stellung des besagten Dreipunktbocks (16) mit Hinsicht auf den besagten Radbaum (14) umfasst und in Reaktion auf das Heben und Senken des besagten Bocks (16) ein Elevationssignal abgibt.

7. Ein Steuersystem nach Anspruch 6, das Hubmittel (42) umfasst, um den besagten Radbaum (14) mit Hinsicht auf das besagte Lenkrad (26) zu heben und zu senken.

8. Ein Steuersystem nach Anspruch 7, dessen besagte Steuermittel (55) zur Betätigung des besagten Hubmittels (42) eingesetzt werden können, um den besagten Radbaum (14) in Reaktion auf das besagte Elevationssignal des besagten Bocküberwachungsmittels (20), wodurch entweder das Heben oder das Senken des besagten Dreipunktbocks (16) gemeldet wird, mit Hinsicht auf das besagte Lenkrad (26) zu heben oder zu senken.

9. Ein Steuersystem nach Anspruch 8, das ferner Folgendes umfasst:
ein Zeitstellmittel zur Speicherung einer vorgewählten Hubverzögerung;
und dessen besagte Steuermittel (55) zur Betätigung des besagten Hubmittels (42) zum Heben oder Senken des besagten Radbaums (14) mit Hinsicht auf das besagte Lenkrad (26) nach besagter vorgewählter Verzögerung in Reaktion auf das besagte Elevationssignal des besagten Bocküberwachungsmittels (20) eingesetzt werden können, wodurch entweder das Heben oder das Senken des besagten Dreipunktbocks (16) angezeigt wird.

10. Ein Steuersystem nach vorstehenden Ansprüchen, das ferner ein Distanzüberwachungsmittel (28) umfasst, um die Umdrehung des besagten Lenkrads (26) zu überwachen und ein Distanzsignal abzugeben, das der von besagtem Lenkrad zurückgelegten Strecke entspricht.

11. Ein Steuersystem nach Anspruch 10, das in Verbindung mit Anspruch 8 zusätzlich noch Folgendes umfasst:
ein Speichermittel zur Speicherung der vorgewählten Hubstrecke des besagten Rads;
und dessen besagte Steuermittel (55) zur Betätigung des besagten Hubmittels (42) zum Heben oder Senken des besagten Radbaums (14) mit Hinsicht auf das besagte Lenkrad (26) eingesetzt werden können, nachdem das besagte Rad die besagte vorgewählte Strecke in Reaktion auf das besagte Elevationssignal des besagten Bocküberwachungsmittels (20) zurückgelegt hat, wodurch das Heben bzw. Senken des besagten Dreipunktbocks gemeldet wird.

12. Ein Steuersystem nach Anspruch 11, das ferner Folgendes umfasst:
Rückstellmittel zur Rückstellung des besagten Distanzüberwachungsmittels (28) in Reaktion auf das besagte Elevationssignal des besagten Bocküberwachungsmittels (20);
und Vergleichsmittel zum Vergleich des besagten Distanzsignals des besagten Distanzüberwachungsmittels mit. der besagten, gespeicherten, vorgewählten Hubstrecke;
und dessen besagte Steuermittel (55) zur Betätigung des besagten Hubmittels (42) zum Heben oder Senken des besagten Radbaums (14) abhängig von besagtem Vergleich eingesetzt werden können.

13. Ein Steuersystem nach vorstehenden Ansprüchen, dessen besagte Steuermittel (55) zur Lenkung des besagten Lenkrads eingesetzt werden können, damit weitgehend der gleiche Lenk- und Bockwinkel beibehalten werden.

14. Ein Steuersystem nach vorstehenden Ansprüchen, das ferner Folgendes umfasst:
ein Verstellmittel (36), um den besagten Hauptpflugbaum (12) zwischen einer ersten ausgefahrenen Position und einer zweiten, mit Hinsicht auf den besagten Radbaum (14) eingefahrenen Position zu bewegen, wobei der besagte Hauptpflugbaum (12) in der ersten ausgefahrenen Position von dem besagten Radbaum (14) in eine Arbeitsposition und in der besagten zweiten eingefahrenen Position von dem besagten Radbaum (14) in eine nichtarbeitende Position neben dem besagten Radbaum geschwenkt wird.

15. Ein Steuersystem nach Anspruch 14, dessen besagte Steuermittel (55) zur Betätigung des besagten Verstellmittels (36) eingesetzt werden können, um den besagten Hauptpflugbaum (12) zwischen der besagten ersten ausgefahrenen und zweiten eingefahrenen Position zu bewegen.

16. Ein Steuersystem nach Anspruch 15, das ferner Folgendes umfasst:
Verzögerungsmittel zur Speicherung einer vorgewählten Einfahrverzögerung;
und dessen besagte Steuermittel (55) zur Betätigung des besagten Verstellmittels (36) eingesetzt werden können, um den besagten Hauptpflugbaum (12) mit Hinsicht auf den besagten Radbaum (14) in Reaktion auf das besagte Bocksignal, das das Heben bzw. Senken des besagten Dreipunktbocks (16) anzeigt, nach besagter vorgewählter Einfahrverzögerung von der besagten ersten ausgefahrenen Position zu einer besagten zweiten eingefahrenen Position oder von der besagten zweiten eingefahrenen Position zu der besagten ersten ausgefahrenen Position zu bewegen.

17. Ein Steuersystem nach Anspruch 9 und Anspruch 16, dessen besagte vorgewählte Einfahrverzögerung länger ist als die besagte vorgewählte Hubverzögerung.

18. Ein Steuersystem nach Anspruch 7 und vorstehenden Ansprüchen 14 bis 17, dessen besagte Steuermittel (55) zur Betätigung des besagten Verstellmittels (36) eingesetzt werden können, um den besagten Hauptpflugbaum (12) mit Hinsicht auf den besagten Radbaum (14) in Reaktion auf die Betätigung des besagten Hubmittels (42) zum Heben oder Senken des besagten Radbaums (14) von der besagten ersten ausgefahrenen Position zu der besagten zweiten eingefahrenen Position oder von der besagten zweiten eingefahrenen Position zu der besagten ersten ausgefahrenen Position zu bewegen.

19. Ein Steuersystem nach Anspruch 18, dessen besagte Steuermittel (55) zur Betätigung des besagten Verstellmittels (36) eingesetzt werden können, um den besagten Hauptpflugbaum (12) mit Hinsicht auf den besagten Radbaum (14) von der besagten ersten ausgefahrenen Position zu der besagten zweiten eingefahrenen Position oder von der besagten zweiten eingefahrenen Position zu der besagten ersten ausgefahrenen Position zu bewegen, nachdem nach der Betätigung des besagten Hubmittels (42), um den besagten Radbaum (14) zu heben bzw. zu senken, eine vorgewählte Verzögerung verflossen ist.

20. Ein Steuersystem nach Anspruch 15, das ferner Folgendes umfasst:
ein Speichermittel zum Speichern einer vorgewählten Einfahrstrecke des besagten Rads (26);
und dessen besagte Steuermittel (55) zur Betätigung des besagten Verstellmittels (36) eingesetzt werden können, um den besagten Hauptpflugbaum (12) mit Hinsicht auf den besagten Radbaum (14) von der besagten ersten ausgefahrenen Position zu der besagten zweiten eingefahrenen Position oder von der besagten zweiten eingefahrenen Position zu der besagten ersten ausgefahrenen Position zu bewegen, nachdem das besagte Rad (26) die besagte vorgewählte Einfahrstrecke in Reaktion auf das besagte Bocksignal, mit dem entweder das Heben oder das Senken des besagten Dreipunktbocks (16) angezeigt wird, zurückgelegt hat.

21. Ein Steuersystem nach Anspruch 18, dessen besagte Steuermittel (55) zur Betätigung des besagten Verstellmittels (36) eingesetzt werden können, um den besagten Hauptpflugbaum (12) mit Hinsicht auf den besagten Radbaum (14) von der besagten ersten ausgefahrenen Position zu der besagten zweiten eingefahrenen Position oder von der besagten zweiten eingefahrenen Position zu der besagten ersten ausgefahrenen Position über eine vorgewählte Strecke nach Betätigung des besagten Hubmittels (42) zum Heben oder Senken des besagten Radbaums (14) zu bewegen.

22. Ein Steuersystem nach Anspruch 11 und Anspruch 20, dessen besagte vorgewählte Einfahrdistanz länger ist als die besagte vorgewählte Hubdistanz.

23. Ein Steuersystem nach Ansprüchen 14 bis 22, das ferner Folgendes umfasst:
Verstellkontrollmittel (22, 50, 52, 54), mit denen die Verstellung des besagten Hauptpflugbaums (12) mit Hinsicht auf den besagten Radbaum (14) überwacht und ein dementsprechendes Verstellsignal abgegeben wird.

24. Ein Steuersystem nach Anspruch 23, dessen besagte Verstellkontrollmittel (22, 50, 52, 54) zur Abgabe eines ausgefahrenen Verstellsignals und eines eingefahrenen Verstellsignals eingesetzt werden können, sobald sich der Hauptpflugbalken (12) in die besagte erste ausgefahrene Position bzw. in die besagte zweite eingefahrene Position bewegt.

25. Ein Steuersystem nach Anspruch 24, dessen besagte Verstellkontrollmittel (22, 50, 52, 54) zur Abgabe eines weiteren Verstellsignals eingesetzt werden können, sobald sich der besagte Hauptpflugbalken (12) in eine weitere versetzte Position zwischen der besagten ersten ausgefahrenen Position und der besagten zweiten eingefahrenen Position bewegt.

26. Ein Steuersystem nach Anspruch 24 oder Anspruch 25, dessen besagte Steuermittel (55) zur Betätigung des besagten Verstellmittels (36) eingesetzt werden können, um den besagten Hauptpflugbalken (12) von der besagten ersten ausgefahrenen Position zu einer besagten zweiten eingefahrenen Position zu bewegen und das besagte Verstelimittel (36) in Reaktion auf das besagte eingefahrene Verstellsignal auszuschalten.

27. Ein Steuersystem nach Ansprüchen 24, 25 oder 26, dessen besagte Steuermittel (55) zur Betätigung des besagten Verstellmittels (36) eingesetzt werden können, um den besagten Hauptpflugbalken (12) zwischen der besagten ersten ausgefahrenen Position und der besagten zweiten eingefahrenen Position zu bewegen und das besagte Verstellmittel (36) in Reaktion auf ein weiteres besagtes Verstellsignal auszuschalten.

28. Ein Steuersystem nach vorstehenden Ansprüchen, das ferner ein Drehmittel (40) umfasst, das zur Drehung des besagten Hauptpflugbalkens (12) eingesetzt werden kann.

29. Ein Steuersystem nach Anspruch 28 in Verbindung mit Ansprüchen 23 bis 27, dessen besagte Steuermittel (55) zur Betätigung des besagten Drehmittels (40) eingesetzt werden können, um den besagten Hauptpflugbalken (12) in Reaktion auf ein vorgewähltes Signal der besagten Verstellkontrollmittel (22, 50, 52, 54) zu drehen.

30. Ein Steuersystem nach Anspruch 29, dessen besagtes vorgewähltes Signal das besagte eingefahrene Verstellsignal ist.

## Revendications

1. Un système de commande pour une charrue semi-portée ayant :
une tête d'attelage (16) pour raccordement à un tracteur ;
une flèche de roue de charrue (14) à montage pivotant sur ladite tête d'attelage (16) ;
une roue directrice (26) fixée à ladite flèche de roue pour braquer ladite charrue ;
et une flèche principale de charrue (12) à montage pivotant sur ladite flèche de roue (14) pour porter des socs de charrue multiples (13).
**caractérisé en ce que** le système comprend :
un premier dispositif de détection (18) pour contrôler l'angle de la flèche de roue de charrue (14) par rapport à ladite tête d'attelage et donnant un premier signal de la flèche de roue, représentant l'angle de la tête d'attelage ;
un deuxième dispositif de détection (24) pour contrôler l'angle de ladite roue directrice (26) de la charrue par rapport à ladite flèche de roue (14) de la charrue et donnant un deuxième signal de direction représentant l'angle de braquage;
et un dispositif de commande (55) pour contrôler lesdits signaux de la flèche de roue et de braquage et commandant l'angle de la roue directrice (26) en fonction de cela.

2. Un système de commande tel que revendiqué dans la revendication 1 où le dispositif de commande (55) est utilisable pour comparer l'angle de braquage contrôlé de ladite roue directrice (26) à une valeur présélectionnée et commander ledit angle de braquage en fonction de cela.

3. Un système de commande tel que revendiqué dans la revendication 1 ou 2 où le dispositif de commande (55) est utilisable pour régler l'angle de braquage de ladite roue directrice (26) en fonction de l'angle de la tête d'attelage contrôlé de ladite flèche de roue (14).

4. Un système de commande tel que revendiqué dans n'importe laquelle des revendications précédentes où ledit dispositif de commande (55) est utilisable pour commander l'angle de braquage de la roue directrice (26) donc commander la largeur de labourage effective de la charrue.

5. Un système de commande tel que revendiqué dans n'importe laquelle des revendications précédentes où le dispositif de commande (55) est utilisable pour commander l'angle de braquage de la roue directrice (26) donc de braquer ladite charrue dans une direction présélectionnée par rapport à la direction de remorquage de ladite tête d'attelage par ledit tracteur.

6. Un système de commande tel que revendiqué dans n'importe laquelle des revendications précédentes comprenant en plus un dispositif (20) pour contrôler la position verticale de ladite tête d'attelage (16) par rapport à ladite flèche de roue (14) et donnant un signal d'élévation en réponse à la montée ou la descente de la tête d'attelage (16).

7. Un système de commande tel que revendiqué dans la revendication 6 ayant un dispositif de levage (42) pour monter et descendre ladite flèche de roue (14) par rapport à ladite roue directrice (26).

8. Un système de commande tel que revendiqué dans la revendication 7 où ledit dispositif de commande (55) est utilisable pour actionner ledit dispositif de levage (42) pour monter ou descendre ladite flèche de roue (14) par rapport à ladite roue directrice (26) en réponse audit signal d'élévation dudit dispositif de contrôle de la tête d'attelage (20) indiquant respectivement la montée ou la descente de ladite tête d'attelage (16).

9. Un système de commande tel que revendiqué dans la revendication 8 comprenant en plus :
un dispositif minuteur pour mémoriser un délai de levage présélectionné ;
et où ledit dispositif de commande (55) est utilisable pour actionner ledit dispositif de levage (42) pour monter ou descendre ladite flèche de roue (14) par rapport à ladite roue directrice (26) après ledit délai présélectionné, en réponse audit signal d'élévation dudit dispositif de contrôle de la tête d'attelage (20) indiquant respectivement la montée ou la descente de ladite tête d'attelage (16).

10. Un système de commande tel que revendiqué dans n'importe laquelle des revendications précédentes comprenant en plus un dispositif de distance (28) pour contrôler la rotation de ladite roue directrice (26) et donner un signal de distance représentant la distance parcourue par ladite roue directrice.

11. Un système de commande tel que revendiqué dans la revendication 10 subordonnée à la revendication 8 comprenant en plus :
un dispositif de mémoire pour mémoriser une distance de levage présélectionnée du parcours de ladite roue ;
et où ledit dispositif de commande (55) est utilisable pour actionner ledit dispositif de levage (42) pour monter ou descendre ladite flèche de roue (14) par rapport à ladite roue directrice (26) après que ladite roue a parcouru ladite distance présélectionnée, en réponse audit signal d'élévation dudit dispositif de contrôle de la tête d'attelage (20) indiquant respectivement la montée ou la descente de ladite tête d'attelage (16).

12. Un système de commande tel que revendiqué dans la revendication 11 comprenant en plus :
un dispositif de réarmement pour réarmer ledit dispositif de contrôle de distance (28) en réponse audit signal d'élévation dudit dispositif de contrôle de la tête d'attelage (20) ;
et un dispositif de comparaison pour comparer ledit signal de distance dudit dispositif de contrôle de distance avec ladite distance de levage présélectionnée mémorisée parcourue ;
et où ledit dispositif de commande (55) est utilisable pour actionner ledit dispositif de levage (42) pour monter ou descendre ladite flèche de roue (14) en fonction de ladite comparaison.

13. Un système de commande tel que revendiqué dans n'importe laquelle des revendications précédentes où ledit dispositif de commande (55) est utilisable pour braquer ladite roue directrice de façon à maintenir pratiquement identiques ledit angle de braquage et ledit angle de tête d'attelage.

14. Un système de commande tel que revendiqué dans n'importe laquelle des revendications précédentes comprenant en plus :
un dispositif de décalage (36) pour déplacer ladite flèche principale de charrue (12) entre une première position déployée et une deuxième position repliée par rapport à ladite flèche de roue (14) où, à ladite première position déployée, ladite flèche principale (12) est pivotée de ladite flèche de roue (14) jusqu'à une position de travail et, dans la deuxième position repliée, ladite flèche principale (12) est pivotée de ladite flèche de roue (14) jusqu'à une position d'inactivité adjacente à ladite flèche de roue.

15. Un système de commande tel que revendiqué dans la revendication 14 où ledit dispositif de commande (55) est utilisable pour actionner ledit dispositif de décalage (36) pour déplacer ladite flèche principale de charrue (12) entre lesdites première position déployée et deuxième position repliée.

16. Un système de commande tel que revendiqué dans la revendication 15 comprenant en plus :
un dispositif de délai pour mémoriser un délai de repliage présélectionné ;
et où ledit dispositif de commande (55) est utilisable pour actionner ledit dispositif de décalage (36) pour déplacer ladite flèche principale (12) par rapport à ladite flèche de roue (14) de ladite première position déployée vers ladite deuxième position repliée ou de ladite deuxième position repliée vers ladite première position déployée, après ledit délai de repliage présélectionné, en réponse audit signal de la tête d'attelage indiquant respectivement la montée ou la descente de ladite tête d'attelage (16).

17. Un système de commande tel que revendiqué dans les revendications 9 et 16 où ledit délai de repliage présélectionné est plus long que ledit délai de levage présélectionné.

18. Un système de commande tel que revendiqué dans la revendication 7 et n'importe laquelle des revendications 14 à 17 où ledit dispositif de commande (55) est utilisable pour actionner ledit dispositif de décalage (36) pour déplacer ladite flèche principale (12) par rapport à ladite flèche de roue (14) de ladite première position déployée vers ladite deuxième position repliée ou de ladite deuxième position repliée vers ladite première position déployée, en réponse à l'actionnement dudit dispositif de levage (42) pour respectivement monter ou descendre ladite flèche de roue (14).

19. Un système de commande tel que revendiqué dans la revendication 18 où ledit dispositif de commande (55) est utilisable pour actionner ledit dispositif de décalage (36) pour déplacer ladite flèche principale (12) par rapport à ladite flèche de roue (14) de ladite première position déployée vers ladite deuxième position repliée ou de ladite deuxième position repliée vers ladite première position déployée, après un délai présélectionné de l'actionnement dudit dispositif de levage (42) pour respectivement monter ou descendre ladite flèche de roue (14).

20. Un système de commande tel que revendiqué dans la revendication 15 comprenant également :
un dispositif de mémoire pour mémoriser une distance de repliage présélectionnée parcourue de ladite roue (26) ;
et où ledit dispositif de commande (55) est utilisable pour actionner ledit dispositif de décalage (36) pour déplacer ladite flèche principale (12) par rapport à ladite flèche de roue (14) de ladite première position déployée vers ladite deuxième position repliée ou de ladite deuxième position repliée vers ladite première position déployée, après que ladite roue (26) a parcouru ladite distance de repliage présélectionnée, en réponse audit signal de la tête d'attelage indiquant respectivement la montée ou la descente de ladite tête d'attelage (16).

21. Un système de commande tel que revendiqué dans la revendication 18 où ledit dispositif de commande (55) est utilisable pour actionner ledit dispositif de décalage (36) pour déplacer ladite flèche principale (12) par rapport à ladite flèche de roue (14) de ladite première position déployée vers ladite deuxième position repliée ou de ladite deuxième position repliée vers ladite première position déployée, une distance parcourue présélectionnée après l'actionnement dudit dispositif de levage (42) pour respectivement monter ou descendre ladite flèche de roue (14).

22. Un système de commande tel que revendiqué dans les revendications 11 et 20 où ladite distance de repliage présélectionnée est plus longue que ladite distance de levage présélectionnée.

23. Un système de commande tel que revendiqué dans n'importe laquelle des revendications 14 à 22, comprenant également:
des dispositifs de contrôle de décalage (22, 50, 52, 54) pour contrôler la position de décalage de ladite flèche principale (12) par rapport à ladite flèche de roue (14) et donnant un signal de décalage en fonction de cela.

24. Un système de commande tel que revendiqué dans la revendication 23 où lesdits dispositifs de contrôle de décalage (22, 50, 52, 54) sont utilisables pour donner un signal de décalage déployé et un signal de décalage replié en réponse à ladite flèche principale (12) se déplaçant respectivement à ladite première position déployée et à ladite deuxième position repliée.

25. Un système de commande tel que revendiqué dans la revendication 24 où lesdits dispositifs de contrôle de décalage (22, 50, 52, 54) sont utilisables pour donner un nouveau signal de décalage en réponse à ladite flèche principale (12) se déplaçant à une nouvelle position de décalage intermédiaire ladite première position déployée et ladite deuxième position repliée.

26. Un système de commande tel que revendiqué dans les revendications 24 et 25 où ledit dispositif de commande (55) est utilisable pour actionner ledit dispositif de décalage (36) pour déplacer ladite flèche principale de charrue (12) de ladite première position déployée vers ladite deuxième position repliée et pour désactiver ledit dispositif de décalage (36) en réponse audit signal de décalage replié.

27. Un système de commande tel que revendiqué dans les revendications 24, 25 ou 26 où ledit dispositif de commande (55) est utilisable pour actionner ledit dispositif de décalage (36) pour déplacer ladite flèche principale de charrue (12) entre ladite première position déployée et ladite deuxième position repliée et pour désactiver ledit dispositif de décalage (36) en réponse audit nouveau signal de décalage.

28. Un système de commande tel que revendiqué dans n'importe laquelle des revendications précédentes comprenant en plus un dispositif de retournement (40) actionnable pour retourner ladite flèche principale de charrue (12).

29. Un système de commande tel que revendiqué dans la revendication 28 subordonnée à n'importe laquelle des revendications 23 à 27 où ledit dispositif de commande (55) est utilisable pour actionner ledit dispositif de retournement (40) pour retourner ladite flèche principale de charrue (12) en réponse à un signal préselectionné desdits dispositifs de contrôle de décalage (22, 50, 52, 54).

30. Un système de commande tel que revendiqué dans la revendication 29 où ledit signal préselectionné est ledit signal de décalage replié.
